# NEUE EUROPÄISCHE PATENTSCHRIFT

(11) **EP 0 684 908 B2**
(45) Veröffentlichungstag und Bekanntmachung des Hinweises auf die Entscheidung über den Einspruch: **04.09.2002**
(45) Hinweis auf die Patenterteilung: 15.07.1998
(21) Anmeldenummer: 94908300.0
(22) Anmeldetag: 14.02.1994
(51) Int. Cl.: B42D 15/10

(54) **SICHERHEITSDOKUMENT UND VERFAHREN ZU SEINER HERSTELLUNG**
SAFETY DOCUMENT AND PROCESS FOR PRODUCING THE SAME
DOCUMENT DE SECURITE ET SON PROCEDE DE PRODUCTION

(30) Priorität: 19.02.1993 DE 4305205; 11.11.1993 DE 4338595
(43) Veröffentlichungstag der Anmeldung: 06.12.1995
(73) Patentinhaber: Giesecke & Devrient GmbH, 81677 München (DE)
(72) Erfinder: KAULE, Wittich, D-82275 Emmering (DE); GRAUVOGL, Gregor, D-80331 München (DE)
(74) Vertreter: Klunker . Schmitt-Nilson . Hirsch
(86) Internationale Anmeldenummer: EP9400417
(87) Internationale Veröffentlichungsnummer: WO94019201

(56) Entgegenhaltungen:
- EP-A- 0 013 418
- EP-A- 0 145 481
- EP-A- 0 170 832
- EP-A- 0 191 592
- EP-A- 0 249 266
- EP-A- 0 433 575
- EP-A- 0 440 045
- EP-A- 0 497 555
- WO-A-93/05124
- GB-A- 2 093 404
- GB-A- 2 215 863
- US-A- 4 215 170
- US-A- 4 576 439
- US-A- 4 758 296
- N.L.Hancox (Editor): "Fibre Composite N.L.Hancox (Editor): "Fibre Composite Hybrid Materials", RKay: Resin Systems, Hybrid Materials", RKay: Resin Systems, Chapter 2,Section 2.B.5.1 (1981) Seiten Chapter 2,Section 2.B.5.1 (1981) Seiten 44-45 44-45
- C.E.Hoyle (Editor): "Radiation Curing of C.E.Hoyle (Editor): "Radiation Curing of Polymeric Materials"; C.E.Hoyle: Polymeric Materials"; C.E.Hoyle: Photocurable Coatings, Chapter 1, American Photocurable Coatings, Chapter 1, American Chemical Society, Washington DC (1990), Chemical Society, Washington DC (1990), Seiten 1-14 Seiten 1-14

## Beschreibung

Die Erfindung betrifft ein Sicherheitsdokument, wie eine Banknote, Ausweiskarte oder dergleichen, mit einem mehrschichtigen Sicherheitselement, das zumindest zwei Kunststoffschichten aus Reaktionslacken aufweist, zwischen welche Beugungsstrukturen, insbesondere holographische Strukturen in Form einer ReliefStruktur vorliegen und die mit einer Reflektionsschicht kombiniert sind, wobei eine erste Kunststoffschicht einerseits direkt an das Dokument und andererseits an die Reflektionsschicht angrenzt. Die Erfindung betrifft auch eine mehrlagige Transferfolie und ein Verfahren zur Herstellung eines Sicherheitspapieres bzw. -dokuments.

Optische variable Elemente, wie Hologramme, Beugungsgitter oder Interferenzschichtelemente, werden aufgrund ihrer mit dem Betrachtungswinkel variierenden optischen Eigenschaften seit einiger Zeit bevorzugt als Fälschungs- bzw. Kopierschutz verwendet. Für die Massenherstellung derartiger Elemente ist es üblich, sogenannte Masterhologramme herzustellen, welche die jeweiligen Phaseninformationen in Form einer räumlichen Reliefstruktur aufweisen. Ausgehend vom Masterhologramm werden durch Vervielfältigung sogenannte Prägestempel erzeugt, mit deren Hilfe die benötigten Hologramme in großer Stückzahl geprägt werden können.

Der Prägevorgang kann auch direkt auf dem Dokumentenmaterial erfolgen, wie in der EP-OS 0 338 378 beschrieben. Hier wird in einem kontinuierlichen Verfahren Banknotenpapier in Rollenform zuerst beidseitig bedruckt und anschließend in bestimmten Bereichen mit einer holografischen Struktur versehen. Der zu prägende Lack und die Reliefstruktur werden gleichzeitig auf das Papier übertragen, indem die Oberflächenstruktur des Prägestempels mit einem strahlungshärtbaren Lack abgedeckt wird. Sobald Papier und Prägestempel in Kontakt gebracht worden sind, wird der Lack ausgehärtet. Der Lack haftet nun an der Papieroberfläche und weist die holografische Reliefstruktur auf. Anschließend erhält die geprägte Struktur eine dünne Vakuummetallisierung, die es ermöglicht, die holografische Information in Reflexion zu beobachten.

Da Papier für UV-Strahlung praktisch undurchlässig ist, kann die Aushärtung des Lacks in diesem Fall nur mit Hilfe von Elektronenstrahlung erfolgen, einem sehr aufwendigen und kostspieligen Verfahren, das darüber hinaus das Papier schädigt. Aus diesem Grund hat sich die Herstellung von Prägehologramm direkt auf dem Dokumentenmaterial in der Praxis nicht durchgesetzt, obwohl diese Vorgehensweise große Vorteile hinsichtlich Fälschungssicherheit aufweist, da das Hologramm praktisch unlösbar mit dem Substrat verbunden ist. Wegen der wesentlich kostengünstigeren Herstellung und vielseitigeren Einsetzbarkeit werden Prägehologramme daher üblicherweise als Mehrschichtelemente auf einem separaten Träger vorbereitet und mittels einer Kleberschicht auf das Dokument übertragen. Der Schichtaufbau wird hierbei so dimensioniert oder durch zusätzliche Maßnahmen präpariert, daß das Hologramm nach dem Verkleben mit dem Dokument von der Trägerschicht abgezogen werden kann.

Das auf das Trägermaterial aufgebrachte Mehrschichtelement kann z. B. nach dem aus der US-PS 4,758,296 bekannten Verfahren hergestellt werden. Hier wird eine auf Rollen umlaufende bahnförmige Prägematrixe mit einem flussigen Harz versehen und mit einem Kunststoffträgermaterial in Kontakt gebracht. Gleichzeitig wird das flüssige Harz mittels UV- oder Elektronenstrahl gehärtet. In einem weiteren Schritt wird die Reliefstruktur mit einer dünnen Metallschicht versehen, so daß das Hologramm in Reflexion beobachtet werden kann. Für den Transfer auf ein Dokument wird der Schichtaufbau schließlich mit einer Heißschmelzkleberschicht versehen, die unter Einwirkung von Wärme und Druck aktiviert wird.

Dieses Sicherheitselement hat jedoch den Nachteil, daß das Hologrammelement durch erneutes Erwärmen des Heißklebers unter Umständen vom Dokument gelöst und auf ein anderes übertragen werden kann.

Im allgemeinen weisen die sogenannten Transferprägefolien mehr als die in der US-PS 4,758,296 beschriebenen Schichten auf. Die EP-OS 0 170 832 beschreibt beispielsweise eine Transferprägefolie, die aus einem Trägermaterial, einer ersten Lackschicht, die das spätere Ablösen des Trägermaterials ermöglicht, einer zweiten Lackschicht, in welche die Beugungsstrukturen eingeprägt sind, einer Metallschicht sowie einer Haftvermittlerschicht besteht. Eine derartige Folie kann nach dem aus der EP-OS 0 433 575 bekannten Verfahren auf ein Dokument aufgeklebt werden. Die Prägefolie, in welche die Hologrammstruktur eingebettet ist, wird hier lokal, in Form einer Markierung auf ein Dokument aufgebracht. Das Dokument wird dafür an einer bestimmten Stelle mit einem Klebstoff bedruckt, der erst durch Bestrahlung mit UV-, Gamma- oder Elektronenstrahlung zähflüssig und klebrig wird. Diese Aktivierung findet entweder vor oder nach dem Zusammenführen von Transferfolie und Dokument statt.

Dieses Sicherheitselement bietet zwar eine irreversible Haftung am Dokument, da der ausgehärtete Klebstoff nicht wieder aktivierbar ist, aber dennoch kann die Prägestruktur freigelegt werden, wenn die zur Reliefstruktur bzw. der Metallschicht angrenzende Schicht eine andere chemische Basis aufweist.

Interessanterweise existieren im Stand der Technik auch Vorschläge, die das Freilegen von Prägeschichten durch Verwendung chemisch gleicher Materialien oder durchlässiger Metallschichten verhindern (GB-A 2 093 404). Da bei allen derartigen Vorschlägen diese Elemente aber mit reversibel aktivierbaren Klebern aufgebracht werden, sind diese Elemente aber unverändert vom Substrat loslösbar und damit doch nicht ausreichend vor Manipulationen geschützt.

Die Aufgabe der Erfindung besteht daher darin, ein Sicherheitsdokument mit einem Prägehologramm vorzuschlagen, bei dem das Prägehologramm einen einfachen Schichtaufbau mit gutem Schichtverbund aufweist, der kostengünstig und einfach herstellbar ist, und das darüber hinaus mit dem Dokument irreversibel verbunden ist.

Gelöst wird diese Aufgabe durch die Merkmale der unabhängigen Ansprüche. Besondere Ausführungsformen ergeben sich aus den Unteransprüchen.

Die Erfindung bietet vielschichtige Vorteile, die sowohl bei der Herstellung von Prägehologrammen direkt auf dem Dokumentenmaterial als auch bei der Herstellung und Aufbringung von Transferprägehologrammen zum Tragen kommen.

So ist es beispielsweise möglich, mit Hilfe von lichthärtenden Substanzen Prägehologramme auf sehr umkomplizierte Weise direkt auf dem Sicherheitspapier zu erzeugen. Derartige Substanzen sind z. B. blaulichthärtende oder verzögert härtende Lacke.

Diese Substanzen lassen sich selbstverständlich ebenso vorteilhaft bei der Herstellung bzw. Übertragung von Transferprägehologrammen einsetzen.

Neben der einfachen Herstellbarkeit bzw. Übertragbarkeit bieten die erfindungsgemäßen Sicherheitsdokumente auch den entscheidenden Vorteil, daß die Sicherheitselemente einen einfachen Schichtaufbau sowie einen intensiven Schichtverbund innerhalb des Elements bzw. zwischen Element und Dokument aufweisen.

Denn für im Elementschichtaufbau aneinandergrenzende Kunststoffschichten werden Materialien gewählt, die chemisch gleichartig sind und daher in den Grenzschichten einen wesentlich intensiveren Verbund gewährleisten als chemisch unterschiedliche Stoffe. Der feste Verbund zum Dokument entsteht durch die Verwendung von Reaktionslacken bzw. -klebstoffen, die irreversibel am Dokument haften.

Um darüber hinaus auch im Fall der Transferprägehologramme einen möglichst einfachen Schichtaufbau zu erhalten, wird erfindungsgemäß die über der Prägeschicht angeordnete Metallschicht nicht mit einer zusätzlichen Folienschicht abgedeckt, die dann wiederum mit einer Kleberschicht ausgestattet wird, sondern direkt mit dem Kleber beschichtet, wobei der Kleber derart ausgewählt wird, daß er im ausgehärteten Zustand (auf dem Substrat) folienähnlichen Charakter hat. Diese Anforderungen erfüllen alle Reaktionskleber, die durch physikalische und/oder chemische Aktivierung auspolymerisieren. Um Manipulationen unterschiedlichster Art entgegenzuwirken, werden die Prägeschicht des Transferelements sowie die Kleberschicht als chemisch gleichartige Schichten ausgebildet. Die zwischen diesen Schichten befindliche Metallschicht wird so dünn ausgeführt, daß sie bereits bei normaler Handhabung Mikrorisse oder Poren aufweist, so daß Präge- und Kleberschicht über diese zufällig vorhandenen Öffnungen in Kontakt stehen und an diesen Stellen einen weitgehend untrennbaren Verbund bilden. Das Freilegen der Reliefstruktur oder das Ablösen des Sicherheitselements führt deshalb unweigerlich zur Zerstörung des genannten Schichtaufbaus. Alternativ oder ergänzend kann die Metallschicht auch systematisch mit Öffnungen versehen werden.

In einer bevorzugten Ausführungsform besteht das Transferelement aus einem Trägermaterial, auf dem vorzugsweise eine UV-härtbare Lackschicht aufgebracht ist, in welcher die Hologrammstruktur eingeprägt ist sowie einer Metallschicht, deren Dicke wesentlich kleiner als 1 µm, vorzugsweise in der Größenordnung von 0,01 µm ist. Der Transfer auf das Dokument erfolgt mittels eines UV-aktivierbaren Klebstoffs, der in seiner chemischen Zusammensetzung dem UV-härtbaren Lack ähnlich ist, wobei Kleber und Lackschicht in Teilbereichen in direktem Kontakt miteinander stehen. Dieses Sicherheitselement weist einen einfachen Schichtaufbau auf, bei dem die Schichten selbst optimal aneinanderhaften.

Je nach Anwendungsfall kann der erfindungsgemäße Schichtaufbau variiert werden. So ist der bereits beschriebene Transferaufbau besonders sinnvoll, wenn extrem dünne Sicherheitselemente benötigt werden, die auf dem späteren Substrat oder Wertpapier möglichst wenig auftragen und nach dem Entfernen der Trägerfolie auch nur noch eine geringe Eigenstabilität aufweisen, wodurch das Entfernen des Sicherheitselements zusätzlich verhindert wird.

Soll das Sicherheitselement in sich mechanisch stabil ausgeführt sein, so bieten sich im Rahmen der Erfindung zwei Alternativen an, nämlich die Verwendung einer mechanisch belastbaren Folie, in die die Reliefstruktur eingeprägt wird oder eine am späteren Sicherheitselement verbleibende Trägerfolie zusammen mit der geprägten Lackschicht oder einer die Prägung aufweisenden Folienschicht. Ein derartiger Aufbau ist erfindungsgemäß jeweils mit einer durchlässigen Metallschicht sowie mit einer aushärtenden Kleberschicht auszustatten. Derartige Ausführungsformen sind insbesondere dann von besonderem Interesse, wenn das Sicherheitselement streifenförmig ausgeführt und als Sicherheitsfaden auf das Papier aufgebracht wird.

Weitere Vorteile und Ausführungsvarianten werden anhand der Figuren erläutert. Es wird darauf hingewiesen, daß die Figuren keine maßstabsgetreue Darstellung der Erfindung bieten, sondern lediglich der Veranschaulichung dienen. Der im folgenden Text verwendete Begriff "Reaktionskleber" umfaßt dabei alle Kleberarten, die unter spezifischen physikalischen oder chemischen Einwirkungen irreversibel aushärten. In diesem Sinne sollen sowohl UV-härtbare als auch Zweikomponenten-Kleber als Reaktionskleber verstanden werden.

Es zeigen:
- Fig. 1: erfindungsgemäßes Sicherheitsdokument,
- Fig. 2: Transferprägefolie gemäß der Erfindung,
- Fig. 3: Verfahren zur Herstellung des erfindungsgemäßen Sicherheitsdokuments nach Fig. 1,
- Fig. 4: Variante des Herstellungsverfahrens nach Fig. 3,
- Fig. 5: Variante des Herstellungsverfahrens nach Fig. 3,
- Fig. 6: weitere Variante des Herstellungsverfahrens nach Fig. 3,
- Fig. 7: weitere Variante des Herstellungsverfahrens nach Fig. 3,
- Fig. 8: Variante des erfindungsgemäßen Sicherheitsdokuments,
- Fig. 9: Verfahren zur Herstellung des erfindungsgemäßen Sicherheitsdokuments nach Fig. 8,
- Fig. 10: Variante des Herstellungsverfahrens nach Fig. 9.

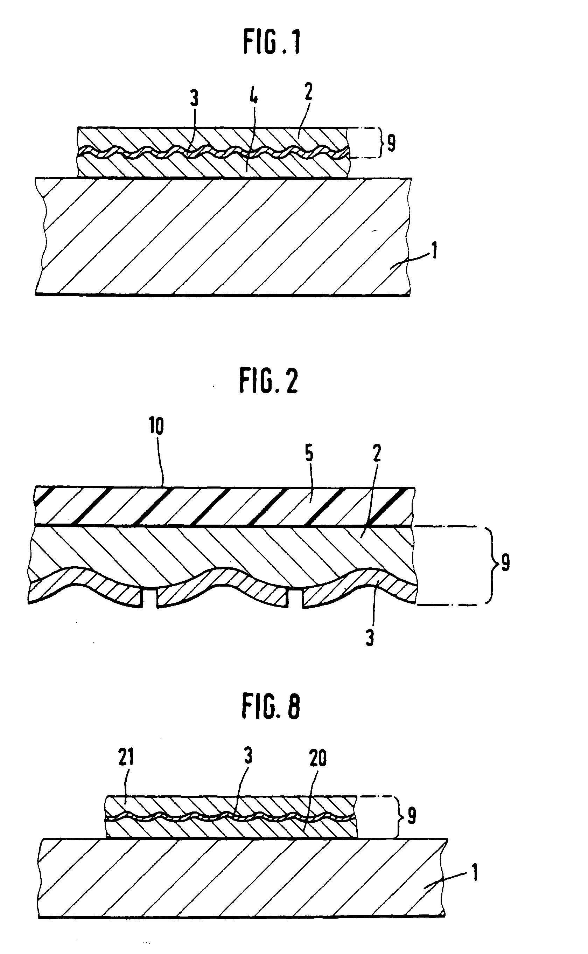

Fig. 1 zeigt einen Querschnitt durch ein Sicherheitsdokument gemäß der Erfindung. Auf dem Sicherheitsdokument 1 ist in einem vorbestimmten Bereich ein Sicherheitselement 9 angeordnet. Das Element 9 kann je nach Anforderung die Form eines Fadens oder Bandes haben oder aber als Marke mit bestimmten Umrißformen ausgebildet sein. Es besteht aus einer UV-härtbaren oder chemisch härtbaren Lackschicht 2, in die Beugungsstrukturen in Form eines Reliefs eingeprägt sind, und einer dünnen Reflexionsschicht 3, vorzugsweise einer Metallschicht. Das Element 9 ist über eine Kleberschicht 4 mit dem Sicherheitsdokument 1 untrennbar verbunden. Diese Kleberschicht 4 besteht aus einem Material, das dem Material der Prägeschicht 2 in chemischer Hinsicht weitgehend ähnlich ist. Dies hat den Vorteil, daß in Bereichen, in denen die Metallschicht Poren oder Mikrorisse enthält (was bei Schichtdicken in der Größenordnung von etwa 1 µm unvermeidlich ist) und in denen somit die Lackschicht 2 und die Kleberschicht 4 direkt aneinandergrenzen, ein sehr fester Verbund entsteht, was im Hinblick auf Fälschungsschutz gegen Nachprägen der Reliefstruktur und Haltbarkeit gegen Verschleiß sehr erwünscht ist. Da UV-härtbare oder chemisch härtbare Lack- und Kleberschichten irreversibel aushärtbar sind, ist ein nachträgliches Lösen der Schichten auszuschließen.

Bei thermischen oder chemischen Angriffen werden außerdem stets beide Schichten in Mitleidenschaft gezogen, wodurch zwangsläufig durch derartige Maßnahmen das gesamte Sicherheitselement zerstört wird.

Das Sicherheitselement 9 wird in dieser Ausführungsform der Erfindung separat als Transferprägefolie 10 hergestellt, deren Aufbau in Fig. 2 dargestellt ist. Das Trägermaterial 5 ist sinnvollerweise als Endloskunststoffband ausgeführt, auf welches in einem kontinuierlichen Prozeß der Lack 2 aufgetragen wird. Über eine Prägematrize, deren Oberflächenstruktur dem Interferenzstreifenmuster einer beliebigen Beugungsstruktur entspricht, wird die Reliefstruktur in den Lack 2 eingeprägt, der während des Prägevorgangs z. B. durch UV-Bestrahlung ausgehärtet wird. Ein derartiges Verfahren ist beispielsweise in der oben erwähnten US-PS 4,758,296 beschieben.

Alternativ kann natürlich auch ein verzögert härtender Lack, d. h. ein Lack, bei welchem die Polymerisation durch Bestrahlung mit geeignetem Licht initiiert und anschließend zeitverzögert abläuft oder ein blaulichthärtender Lack eingesetzt werden. Nähere Angaben zu derartigen Lacken finden sich an anderer Stelle.

Im Anschluß daran wird die Prägestruktur in der Schicht 2 wahlweise mit einer durchgehenden oder einer gerasterten Reflexionsschicht 3, vorzugsweise einer Metallschicht, versehen. Die Rasterung bietet den Vorteil, daß der Verbund zwischen Klebeschicht 4 und Prägeschicht 2 noch fester gestaltet werden kann. Die Größe der metallfreien Bereiche kann beliebig gewählt werden; so ist es denkbar, die metallfreien Bereiche so klein auszuführen, daß sie vom Auge nicht aufgelöst werden können und somit den Gesamteindruck der dargestellten Information nicht beeinträchtigen. Alternativ könnten die metallfreien Bereiche als gestalterisches Element eingesetzt werden, so daß die beugungsoptische Information innerhalb des Sicherheitselementsbereichs nur an bestimmten Stellen visuell beobachtbar ist.

Als Metallisierungsverfahren kommen z. B. das üblicherweise verwendete Vakuumbedampfungsverfahren oder auch photolytische Verfahren in Frage.

Wahlweise kann die Metallisierung mit einer Schutzschicht versehen werden, die allerdings aus einem zur Prägeschicht 2 chemisch ähnlichen Material bestehen sollte.

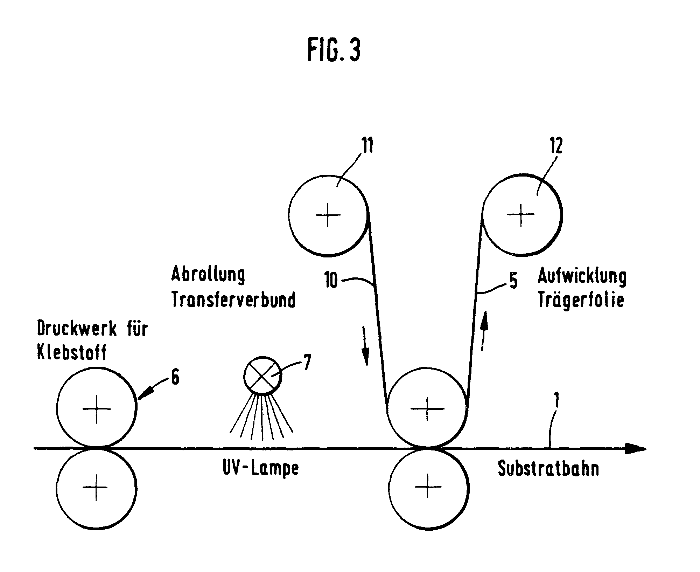

Das fertige Transferprägeband 10 kann als Halbzeug auf Rollen gelagert und auf Abruf in einem Herstellungsverfahren, wie es im folgenden anhand der Fig. 3 - 5 beschrieben wird, eingesetzt werden.

Fig. 3 zeigt einen Ausschnitt aus einem kontinuierlichen Verfahren zur Herstellung von Sicherheitsdokumenten gemäß der Erfindung. Das Sicherheitsdokumentenmaterial 1, vorzugsweise bereits bedrucktes Banknotenpapier, liegt hier in Bahnform vor und wird in einem Druckwerk 6 lokal mit einem speziellen Klebstoff beschichtet.

Bei diesem Klebstoff handelt es sich beispielsweise um einen kationisch reagierenden UV-Klebstoff, der vor der Aktivierung wie eine Druckfarbe behandelt werden kann. Im Gegensatz zu üblichen radikalisch reagierenden UV-Klebern, die nur während der Bestrahlung aushärten, hat man bei sogenannten kationisch aushärtenden Klebern die Eigenschaft, daß diese durch die Bestrahlung mit UV-Licht nur aktiviert werden und auch nach der Bestrahlung weiter aushärten. Derartige kationisch härtende UV-Lacksysteme werden z. B. von der Firma Herberts unter der Typenbezeichnung ISS 1202 vertrieben.

Nachdem der Klebstoff 4 in dem Druckwerk 6 auf das Substrat 1 übertragen wurde, wird er, wie in Fig. 3 gezeigt, in der nächsten Station mit einer UV-Lampe 7 bestrahlt, um seine Klebfähigkeit zu aktivieren. Im folgenden Schritt wird die Transferprägefolie 10 gemäß Fig. 2 von einer Vorratsrolle 11 zugeführt. Das Element 9 (Fig. 2) haftet an der Klebeschicht und wird in Form der Kleberbeschichtung von dem Trägerband 5 abgezogen. Das Trägerband 5 sowie die nicht übertragenen Reste des Elementschichtaufbaus 9 werden auf der Transferbandrolle 12 aufgewickelt. In einem letzten nicht gezeigten Verfahrensschritt wird das mit den Sicherheitselementen 9 versehene Substrat 1 in geeignete Formate, z. B. in einzelne Banknoten, zerschnitten.

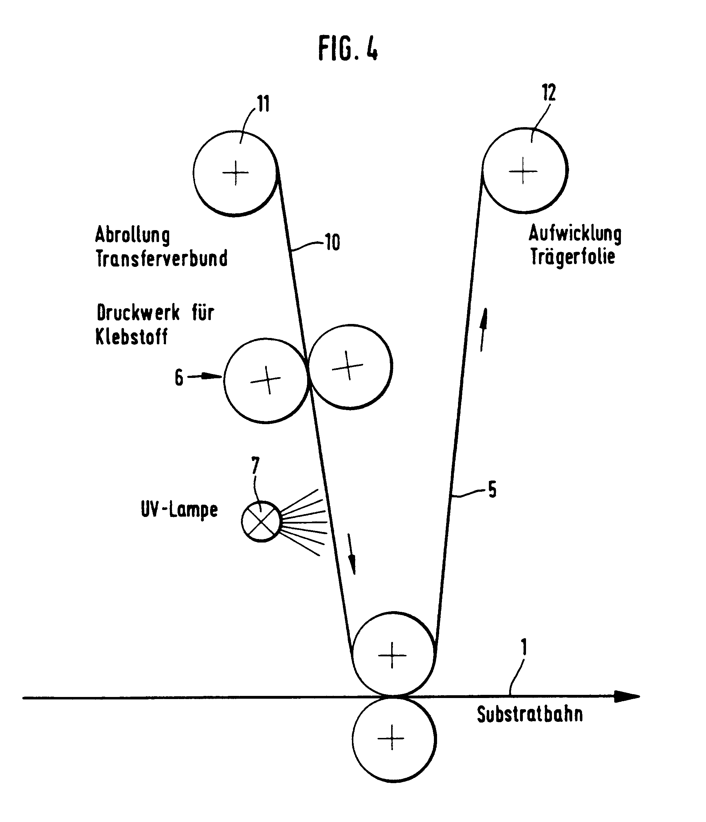

In einer Variante kann der Klebstoff 4 auch auf die Transferprägefolie 10 aufgedruckt und dort aktiviert werden. Diese Möglichkeit ist in Fig. 4 dargestellt. Bevor die von der Rolle 11 abgezogene Prägefolie 10 mit dem Substrat 1 in Verbindung gebracht wird, wird ein UVinitiierbarer Klebstoff 4 in dem Druckwerk 6 in beliebiger Musterung auf die Metallschicht 3 der Prägefolie 10 aufgetragen und anschließend mit einer UV-Lampe 7 aktiviert. Auch in diesem Fall wird das Trägerband 5 direkt nach dem Verkleben über eine Rolle 12 vom Substrat 1 abgezogen.

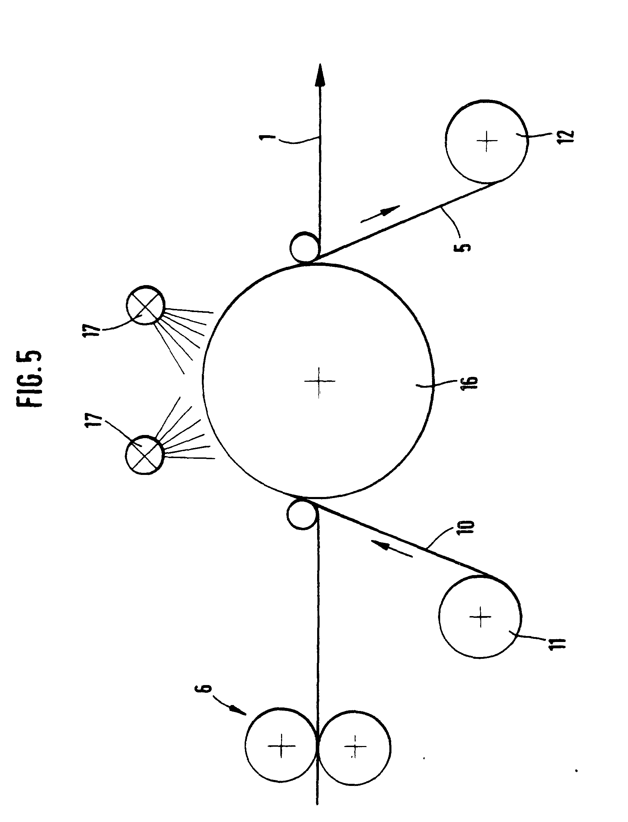

Anstelle der verzögert härtenden Klebstoffe können selbstverständlich auch die bereits erwähnten blaulichthärtenden Klebstoffe verwendet werden. Diese Verfahrensvariante ist in Fig. 5 dargestellt. Die Papierbahn 1 wird in einem Druckwerk 6 mit dem blaulichthärtenden Klebstoff versehen. Hierbei handelt es sich z. B. um ein Acrylat der Firma Imperial Chemical Industries PCL mit der Bezeichnung LCR 0603B.

Im Bereich des Anpreßzylinders 16 werden das Transfermaterial 10 und die Papierbahn 1 miteinander in Kontakt gebracht und mit Blaulicht 17 bestrahlt. Der Klebstoff härtet dabei sekundenschnell aus, da das Papier für Blaulicht durchlässig ist. Anschließend kann wie üblich die Transferfolie von dem Hologramm-Papierverbund abgezogen werden.

In Abweichung von den in Fig. 3 - 5 dargestellten Ausführungsformen ist es ebenso möglich, die Trägerfolie 5 vorübergehend oder dauerhaft auf dem Substrat 1 zu belassen. Dies kann als zusätzlicher Schutz vor mechanischen Belastungen vorübergehend, z. B. für einen Lager- oder Transportzeitraum, oder für die gesamte Lebensdauer, z. B. für Sicherheitsfäden, sinnvoll sein. Wichtig ist in diesem Zusammenhang, daß in diesem Fall die durch die Trägerfolie 5 übernommene Funktion als Schutzschicht lediglich zusätzlich zur Schutzschichtfunktion der Lackschicht 2 zu sehen ist. Durch Entfernen der Trägerfolie 5 sind keine Manipulationsmöglichkeiten eröffent, da dadurch die Reliefstruktur noch nicht zugänglich ist.

Die in Fig. 3 - 5 dargestellten Verfahren sind bestechend einfach und bedürfen keiner aufwendigen Schutzmaßnahmen, wie sie beispielsweise beim Einsatz von Elektronenstrahlhärtung oder bei der Verwendung lösungsmittelhaltiger Klebstoffe notwendig sind. Darüber hinaus wird auf diese Weise sowohl ein fester Schichtverbund im Sicherheitselement sowie eine feste Haftung am Dokument erreicht, so daß weder ein Herauslösen der Prägestruktur aus dem Elementschichtaufbau noch ein Ablösen des Elements von dem Dokument möglich ist.

Obwohl die Verwendung von strahlungshärtenden Klebern aus verfahrenstechnischen Gründen, insbesondere wegen der einfachen und extrem schnellen Aushärtung, zu bevorzugen ist, ist alternativ dazu auch der Einsatz von Mehrkomponentenklebern, die in chemischer Hinsicht mit der Prägeschicht verwandt sind. Im Sinne der Erfindung muß auch die Prägeschicht nicht notwendigerweise eine strahlungshärtbare Lackschicht sein, es kann sich auch hier um eine chemisch härtende Schicht handeln, die die gleiche chemische Basis wie die Kleberschicht aufweist.

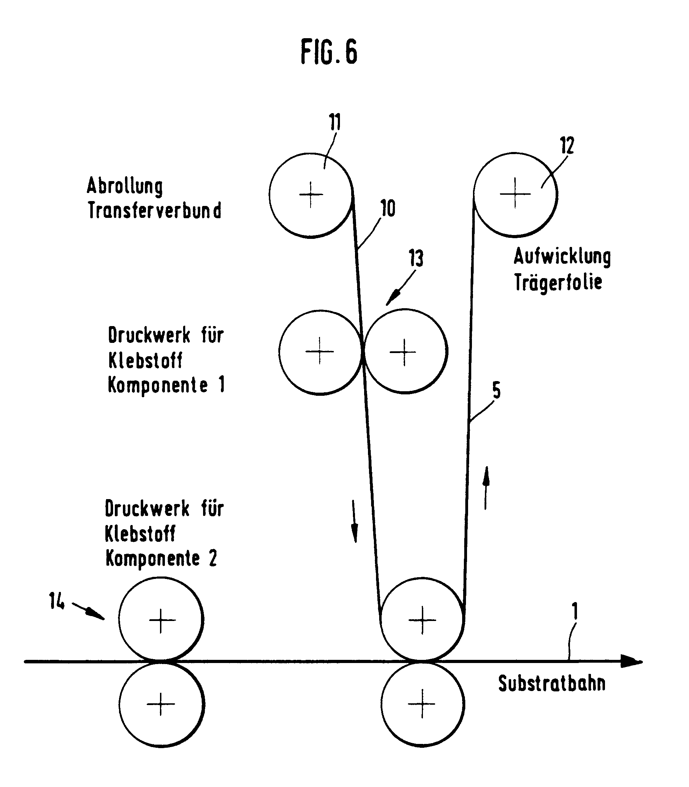

Diese Variationsmöglichkeit ist in Fig. 6 dargestellt. Eine Komponente des Klebers wird in einem Druckwerk 13 direkt auf die von einer Rolle 11 abgezogene Transferprägefolie 10 aufgetragen, während die zweite Komponente im Druckwerk 14 auf das Substrat 1 aufgebracht wird. Beim zusammenführen von Substrat 1 und Transferprägefolie 10 entsteht im Bereich der Klebstoffkomponenten eine selbsthärtende Schicht, die für den Verbund zwischen Substrat 1 und Prägeschicht 2 sorgt. Selbstverständlich kann auch hier das Trägermaterial 5 direkt nach dem Verkleben abgezogen werden, wie in der Fig. gezeigt, oder aber als vorläufige Schutzschicht auf dem Substrat 1 belassen werden.

Die in Fig. 6 dargestellte getrennte Aufbringung der Kleberkomponenten macht das Funktionsprinzip besonders anschaulich. Diese Vorgehensweise ist jedoch nicht bei jedem Zweikomponentenkleber zulässig, da diese in der Regel nur innig vermischt ihre Klebereigenschaften entwickeln. Abweichend von dem in Fig. 6 dargestellten Prinzip kann, falls notwendig, anstelle des Rollenpaares 13 oder 14 auch eine Mischvorrichtung (nicht dargestellt) vorgesehen sein, mit der, in dem Fachmann üblichen Weise, die beiden Komponenten zuerst vermischt und dann gemeinsam aufgetragen werden. Das jeweils andere Rollenpaar entfällt dann bei dieser Ausführungsform.

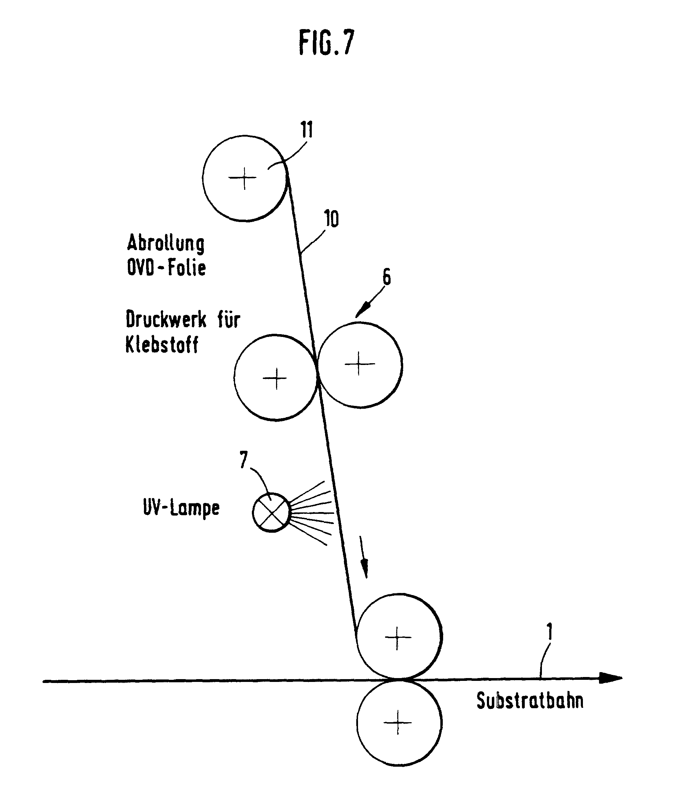

Fig. 7 zeigt eine weitere Möglichkeit zur Herstellung des erfindungsgemäßen Sicherheitselements. Das Verfahren entspricht im wesentlichen dem Herstellverfahren der Fig. 4, nur daß hier das von der Rolle 11 antransportierte Sicherheitselementenband 10 vollständig auf dem Substrat 1 fixiert wird. d. h. kein Tranasferband abgezogen wird. Wie eingangs bereits erwähnt, ist eine derartige Ausführungsform in den Fällen sinnvoll, in denen die Sicherheitselemente eine ausreichende Eigenstabilität aufweisen (stabile Relieffolie) oder ein erhöhter Schutz vor mechanischen Belastungen durch Vorsehen einer zusätzlichen Schutzschicht erwünscht ist (zusätzliche Schutzschicht statt Transferträgerfolie).

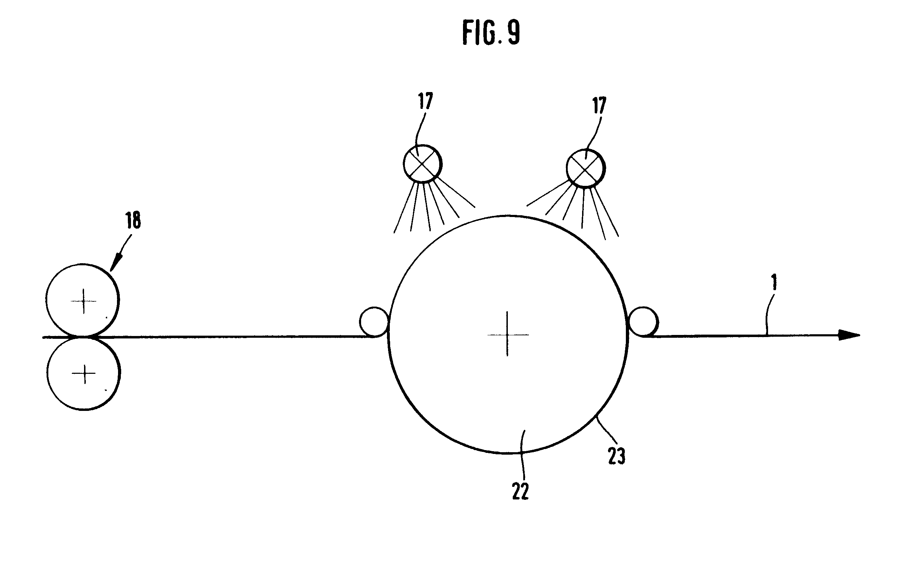

In Fig. 8 ist eine Variante des erfindungsgemäßen Sicherheitsdokuments 1 dargestellt. Das Sicherheitselement 9 besteht in diesem Fall aus der Lackschicht 20, in welche die Beugungsstrukturen in Form eines Reliefs eingeprägt sind, einer dünnen Reflexionsschicht 3, vorzugsweise einer Metallschicht, sowie einer Schutzlackschicht 21. Auch hier kann das Element 9 je nach Anforderun die Form eines Fadens oder Bandes haben oder aber als Marke mit bestimmten Umrißformen ausgebildet sein. Die geprägte Lackschicht 20 besteht erfindungsgemäß aus einem Reaktionslack, insbesondere aus einem UV-initiierten verzögert härtenden oder einem blaulichthärtenden Lack, wie sie bereits erläutert wurden. Die Schutzlackschicht 21 schützt die empfindliche Prägestruktur sowie die Metallschicht 3 vor äußeren Umwelteinflüssen und mechanischen Beeinträchtigungen. Sie besteht vorzugsweise aus einem zur Lackschicht 20 chemisch ähnlichem Material, um im Bereich von Mikrorissen bzw. -löchern in der Metallschicht mit der Lackschicht 20 einen festen Verbund zu bilden.

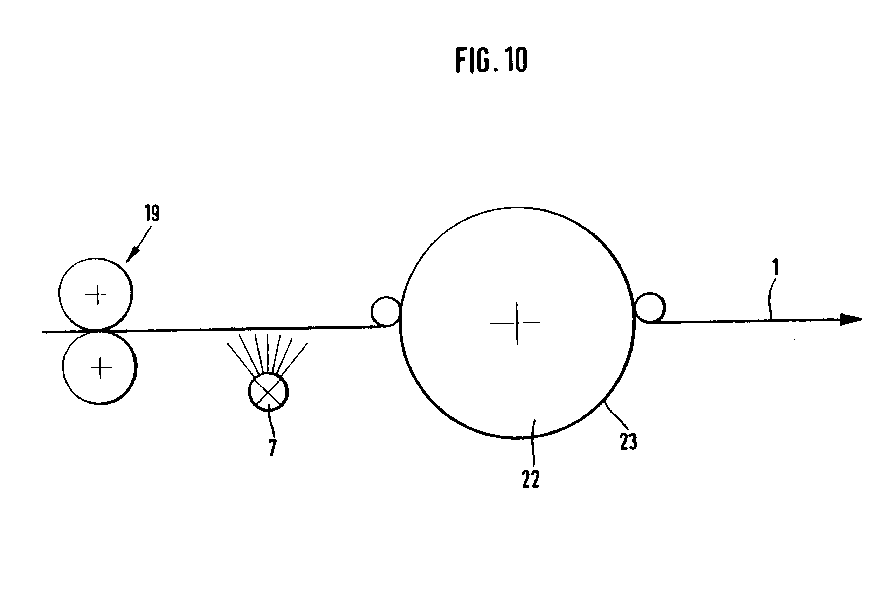

Im Gegensatz zu dem in Fig. 1 gezeigten Sicherheitsdokument wird bei dieser Ausführungsform das Sicherheitselement 9 direkt auf dem Dokument hergestellt. Die verschiedenen Verfahrensweisen, die eine einfache und kostengünstige Herstellung dieses Sicherheitsdokuments ermöglichen, werden anhand der Fig. 9 und 10 näher erläutert.

In Fig. 9 wird ein blaulichthärtender Klebstoff, z. B. das oben erwähnt Acrylat LCR-0603B, mittels eines Druckwerks 18 in der gewünschten Form des späteren Sicherheitselements 9, unter Umständen auch vollflächig, auf das Papiersubstrat 1 aufgebracht. Anschließend wird das vorbehandelte Papier einer Prägestation, hier einem Prägezylinder 22, zugeführt. Die Oberfläche des Prägezylinders weist die holografische Reliefstruktur 23 auf, welche beim Kontakt mit der Lackschicht übertragen wird. Während des Prägevorgangs wird der Lack durch die Papierschicht hindurch mit Hilfe von Blaulicht 17 sekundenschnell ausgehärtet. In nachfolgenden, in der Fig. nicht gezeigten Verfahrensschritten erfolgt die Metallisierung bzw. der Schutzlacküberzug.

Alternativ kann statt der Papierbahn 1 die Prägewalze mit dem Lack versehen werden. Nach der Bestrahlung mit Blaulicht haftet die ausgehärtete Schicht am Papier und wird von der Prägewalze abgezogen.

Fig. 10 zeigt ein ähnliches Verfahren, bei welchem für die zu prägende Schicht ein verzögert härtender Lack verwendet wird. In diesem Fall erfolgt die Bestrahlung der auf das Papier aufgebrachten Lackschicht kurz vor der Prägestation. Die Beaufschlagung mit UV-Licht führt lediglich zur Einleitung der Polymerisation, nicht jedoch zum vollständigen Aushärten. Die noch formbare Lackschicht wird anschließend mit der Reliefstruktur 23 versehen, indem sie mit dem Prägezylinder 22 in Kontakt gebracht wird. Wenn die Substratbahn 1 die Prägestation verläßt, ist die Lackschicht vollständig vernetzt und kann in herkömmlicher Weise weiterverarbeitet werden.

Selbstverständlich ist es auch bei diesem Ausführungsbeispiel möglich, den Lack auf die Prägewalze aufzubringen, dort zu aktivieren und schließlich während des Aushärtevorgangs mit dem Papier in Kontakt zu bringen.

Die geschilderten Verfahren ermöglichen es also, auf einfache Weise ein sehr fälschungssicheres Sicherheitselement herzustellen, das ein Minimum an Elementschichten aufweist und damit auch sehr wenige Verfahrensschritte zu seiner Herstellung benötigt, die zudem auf komplizierte und kostenintensive Techniken verzichten können.

Eine weitere Verfahrensvariante besteht darin, die Prägewalze, wie sie in Fig. 9 und 10 gezeigt ist, mit einer Metallisierung zu versehen, bevor sie mit der Lackschicht in Berührung gebracht wird. Nähere Erläuterungen zu dieser Vorgehensweise finden sich in der EP-OS 0 563 992.

Da insbesondere Sicherheitspapiere häufig eine große Oberflächenrauhigkeit besitzen, die unter Umständen die Wirksamkeit der Beugungsstrukturen beeinträchtigt, kann das Papier wenn nötig vor der Belackung im Bereich des Sicherheitselements durch zusätzliche Maßnahmen geglättet werden, wie sie in der EP-OS 0 440 045 beschrieben sind.

Ferner versteht es sich von selbst, daß im Falle des Transferprägehologramms für die geprägte Schicht und die Kleberschicht beliebige Kombinationen der Reaktionskleber verwendet werden können. Analoges gilt für die Präge- bzw. Schutzschicht des direkt auf dem Dokument erzeugten Hologramms.

## Patentansprüche

1. Sicherheitsdokument, wie eine Banknote, Ausweiskarte oder dergleichen, mit einem mehrschichtigen Sicherheitselement (9), das zumindest zwei Kunststoffschichten (2, 4, 20, 21) aus Reaktionslacken aufweist, zwischen welche Beugungsstrukturen, insbesondere holografische Strukturen, in Form einer Reliefstruktur vorliegen, und die mit einer Reflexionsschicht (3) kombiniert sind, wobei eine erste Kunststoffschicht (4, 20) einerseits direkt an das Dokument und andererseits direkt an die Reflexionsschicht (3) angrenzt, **dadurch gekennzeichnet, daß** die erste Kunststoffschicht (4, 20) eine Reaktionslackschicht aus der Gruppe der kationisch härtenden Lacke oder der blaulichthärtenden Lacke ist.

2. Sicherheitsdokument nach Anspruch 1, **dadurch gekennzeichnet, daß** die erste Kunststoffschicht (4, 20) als kationisch härtender UV-Lack und die zweite Kunststoffschicht als radikalisch härtender UV-Lack ausgebildet ist.

3. Sicherheitsdokument nach Anspruch 1 oder 2, **dadurch gekennzeichnet, daß** die Reflexionsschicht (3) Öffnungen enthält.

4. Sicherheitsdokument, wie eine Banknote, Ausweiskarte oder dergleichen, mit einem mehrschichtigen Sicherheitselement (9), das zumindest zwei Kunststoffschichten (2, 4, 20, 21) aus Reaktionslacken aufweist, zwischen welche Beugungsstrukturen, insbesondere holografische Strukturen, in Form einer Reliefstruktur vorliegen, und die mit einer Reflexionsschicht (3) kombiniert sind, wobei eine erste Kunststoffschicht (4, 20) einerseits direkt an das Dokument und andererseits direkt an die Reflexionssschicht (3) angrenzt, **dadurch gekennzeichnet, daß** die erste Kunststoffschicht (4, 20) eine Reaktionslackschicht aus der Gruppe der chemisch härtenden Mehrkomponentenlacke ist, und daß die Reflexionsschicht (3) Öffnungen enthält.

5. Sicherheitsdokument nach Anspruch 4, **dadurch gekennzeichnet, daß** sowohl die erste Kunststoffschicht (4, 20) als auch die zweite Kunststoffschicht (2, 21) ein chemisch härtender Mehrkomponentenlack ist.

6. Sicherheitsdokument nach wenigstens einem der Ansprüche 1 bis 5, **dadurch gekennzeichnet, daß** die zweite Kunststoffschicht (2, 21) ebenfalls ein Reaktionslack aus der Gruppe der kationisch härtenden Lacke, blaulichthärtenden Lacke oder chemisch härtenden Mehrkomponentenlacke ist

7. Sicherheitsdokument nach wenigstens einem der Ansprüche 1 bis 6, **dadurch gekennzeichnet, daß** die Reflexionschicht (3) eine Dicke aufweist, die kleiner als 1 µm ist.

8. Sicherheitsdokument nach Anspruch 7, **dadurch gekennzeichnet, daß** die Dicke in der Größenordnung 0,01 µm ist.

9. Sicherheitsdokument nach Anspruch 3 oder 4, **dadurch gekennzeichnet, daß** die Öffnungen Mikrorisse oder -poren in der Reflexionsschicht (3) sind.

10. Sicherheitsdokument nach Anspruch 3 oder 4, **dadurch gekennzeichnet, daß** die Öffnungen in der Reflexionsschicht (3) systematisch in einem vorbestimmten Muster vorhanden sind.

11. Sicherheitsdokument nach wenigstens einem der Ansprüche 1 bis 10, **dadurch gekennzeichnet, daß** die Reflexionsschicht (3) eine Metallschicht ist.

12. Sicherheitspapier für die Herstellung einer Banknote, Ausweiskarte oder dergleichen, mit einem mehrschichtigen Sicherheitselement (9), welches zumindest zwei Kunststoffschichten (2, 4, 20, 21) aus Reaktionslacken aufweist, zwischen welchen Beugungsstrukturen, insbesondere holografische Strukturen, in Form einer Reliefstruktur angeordnet sind, die mit einer Reflexionsschicht (3) kombiniert sind, wobei eine erste Kunststoffschicht (4, 20) einerseits direkt an das Sicherheitspapier und andererseits direkt an die Reflexionsschicht (3) angrenzt, **dadurch gekennzeichnet, daß** die erste Kunststoffschicht (4, 20) eine Reaktionslackschicht aus der Gruppe der kationisch härtenden Lacke oder der blaulichthärtenden Lacke ist.

13. Sicherheitspapier für die Herstellung einer Banknote, Ausweiskarte oder dergleichen, mit einem mehrschichtigen Sicherheitselement (9), welches zumindest zwei Kunststoffschichten (2, 4, 20, 21) aus Reaktionslacken aufweist, zwischen welchen Beugungsstrukturen, insbesondere holografische Strukturen, in Form einer Reliefstruktur angeordnet sind, die mit einer Reflexionsschicht (3) kombiniert sind, wobei eine erste Kunststoffschicht (4, 20) einerseits direkt an das Sicherheitspapier und andererseits direkt an die Reflexionsschicht (3) angrenzt, **dadurch gekennzeichnet, daß** die erste Kunststoffschicht (4, 20) eine Reaktionslackschicht aus der Gruppe der chemisch härtenden Mehrkomponentenlacke ist, und daß die Reflexionsschicht (3) Öffnungen enthält.

14. Sicherheitsdokument nach Anspruch 12 oder 13, **dadurch gekennzeichnet, daß** das Sicherheitselement (9) in Form eines Fadens oder Bandes ausgebildet ist.

15. Mehrlagige Transferfolie, bestehend aus einer Trägerschicht und einer Kunststoffschicht, in welcher Beugungsstrukturen, beispielsweise holografische Strukturen, in Form einer Reliefstruktur vorliegen, und die mit einer Reflexonsschicht kombiniert sind, **dadurch gekennzeichnet, daß** die Kunststoffschicht eine Reaktionslackschicht aus der Gruppe der katonisch härtenden Lacke oder der blaulichthärtenden Lacke ist.

16. Mehrlagige Transferfolie, bestehend aus einer Trägerschicht und einer Kunststoffschicht, in welcher Beugungsstrukturen, beispielsweise holografische Strukturen, in Form einer Reliefstruktur vorliegen, und die auf der der Trägerschicht abgewandten Seite mit einer Reflexionsschicht kombiniert ist, **dadurch gekennzeichnet, daß** die Kunststoffschicht eine Reaktionslackschicht aus der Gruppe der chemisch härtenden Mehrkomponentenlacke ist.

17. Mehrlagige Transferfolie, bestehend aus einer Trägerschicht und einer Kunststoffschicht, in welcher Beugungsstrukturen, beispielsweise holografische Strukturen, in Form einer Reliefstruktur vorliegen, und die mit einer Reflexionsschicht kombiniert sind, **dadurch gekennzeichnet, daß** die Kunststoffschicht eine Reaktionslackschicht aus der Gruppe der chemisch härtenden Mehrkomponentenlacke ist, und daß die Reflexionsschicht Öffnungen enthält.

18. Verfahren zur Herstellung eines Sicherheitspapiers, insbesondere für die Herstellung einer Banknote, Ausweiskarte oder dergleichen, mit einem mehrschichtigen Sicherheitselement, das zumindest zwei Kunststoffschichten aus Reaktionslacken aufweist, zwischen welchen Beugungsstrukturen, insbesondere holografische Strukturen, in Form einer Reliefstruktur vorliegen, und die mit einer Reflexionsschicht kombiniert sind, wobei eine der Kunststoffschichten direkt an das Papier angrenzt, **dadurch gekennzeichnet, daß**
- eine Reaktionslackschicht zwischen ein Sicherheitspapier und eine die Beugungsstruktur aufweisende Prägematrize eingebracht wird, wobei der Reaktionslack kurz vor oder während des In-Kontakt-Bringens aktiviert wird und während des Kontakts soweit härtet, daß die Reaktionslackschicht nach der Trennung von der Prägematrize die Beugungsstruktur aufweist, wobei während des Kontakts keine Strahlungseinwirkung erfolgt,
- die geprägte Reaktionslackschicht mit der Reflexionsschicht versehen wird, und
- auf die Reflexionsschicht eine weitere Reaktionslackschicht aufgebracht wird.

19. Verfahren nach Anspruch 18, **dadurch gekennzeichnet, daß** die zu prägende Reaktionslackschicht aus einem kationisch härtenden Lack, insbesondere einem kationisch härtenden UV-Lack, besteht.

20. Verfahren nach Anspruch 18, **dadurch gekennzeichnet, daß** der zu prägende Lack aus einem chemisch härtenden Mehrkomponentenlack besteht.

21. Verfahren zur Herstellung eines Sicherheitspapier, insbesondere für die Herstellung einer Banknote, Ausweiskarte oder dergleichen, mit einem mehrschichtigen Sicherheitselement, das zumindest zwei Kunststoffschichten aus Reaktionslacken aufweist, zwischen welchen Beugungsstrukturen, insbesondere holografische Strukturen, in Form einer Reliefstruktur vorliegen, und die mit einer Reflexionsschicht kombiniert sind, wobei eine der Kunststoffschichten direkt an das Papier angrenzt, **dadurch gekennzeichnet, daß**
- eine Reaktionslackschicht zwischen ein Sicherheitspapier und eine die Beugungsstruktur aufweisende Prägematrize eingebracht wird, wobei der Reaktionslack ein blaulichthärtender Lack ist, der während des In-Kontakt-Bringens durch das Papier hindurch soweit gehärtet wird, daß die Reaktionslackschicht nach der Trennung von der Prägematrize die Begungsstrukturen aufweist,
- die geprägte Reaktionslackschicht mit der Reflexionsschicht versehen wird und
- auf die Reflexionsschicht eine weitere Reaktionslackschicht aufgebracht wird.

22. Verfahren nach Anspruch 21, **dadurch gekennzeichnet, daß** der blaulichthärtende Lack direkt auf das Papier aufgebracht, dort mit der Prägung versehen und während des Prägevorgangs durch das Papier hindurch mit Blaulicht bestrahlt und auf diese Weise ausgehärtet wird.

23. Verfahren nach wenigstens einem der Ansprüche 18 bis 22, **dadurch gekennzeichnet, daß** die zu prägende Reaktionslackschicht zumindest in Teilbereichen auf das Papier aufgebracht wird.

24. Verfahren nach wenigstens einem der Ansprüche 18 bis 23, **dadurch gekennzeichnet, daß** die zu prägende Reaktionslackschicht zumindest in Teilbereichen auf die Prägematrize aufgebracht und mit der Prägung direkt auf das Papier übertragen wird.

25. Verfahren nach wenigstens einem der Ansprüche 18 bis 24, **dadurch gekennzeichnet, daß** das Sicherheitselement in Form eines Fadens oder Bandes auf das Sicherheitspapier aufgebracht wird.

26. Verfahren nach wenigstens einem der Ansprüche 18 bis 25, **dadurch gekennzeichnet, daß** die geprägte Reaktionslackschicht nur teilweise mit der Reflexionsschicht versehen wird, so daß die geprägte Schicht und die zweite Reaktionslackschicht in den reflexionsschichtfreien Bereichen in direktem Kontakt miteinander stehen.

27. Verfahren nach wenigstens einem der Ansprüche 18 bis 26, dadurch gekenzeichnet, daß als Reflexionsschicht eine Metallschicht im Vakuumbedampfungsverfahren oder nach dem fotolythischen Metallisierungsverfahren aufgebracht wird.

28. Verfahren nach wenigsten einem der Ansprüche 18 bis 27, **dadurch gekennzeichnet, daß** die Prägematrize zuerst mit einer Metallisierung versehen wird und erst anschließend die zu prägende Reaktionslackschicht auf diese Metallisierung aufgebracht wird.

29. Verfahren zur Herstellung eines Sicherheitspapieres, insbesondere für die Herstellung einer Banknote, Ausweiskarte oder dergleichen, mit einem mehrschichtigen Sicherheitselement, das zumindest zwei Kunststoffschichten aus Reaktionslacken aufweist, zwischen welchen Beugungsstrukturen, insbesondere holografische Strukturen, in Form einer Reliefstruktur vorliegen, und die mit einer Reflexionsschicht kombiniert sind, wobei eine der Kunststoffschichten direkt an das Papier angrenzt, **dadurch gekennzeichnet, daß**
- ein Trägermaterial mit zumindest einer Kunststoffschicht aus Reaktionslack sowie einer Reflexionsschicht, in welche die Beugungsstrukturen eingeprägt sind, bereitgestellt wird,
- das Sicherheitspapier und/oder die Reflexionsschicht zumindest in Teilbereichen mit einer weiteren Reaktionslackschicht versehen wird,
- das Sicherheitspapier und die Reflexionsschicht über die weitere Reaktionslackschicht in Kontakt gebracht werden, wobei der Reaktionslack kurz vor oder während des In-Kontakt-Bringens aktiviert wird und während des Kontakts soweit härtet, daß ein untrennbarer Verbund entsteht, wobei während des Kontakts keine Strahlung erfolgt,
- in den Fällen, in denen das Trägermaterial eine Transferfolie enthält, diese Transferfolie entfernt wird.

30. Verfahren nach Anspruch 29, **dadurch gekennzeichnet, daß** die auf das Papier bzw. die Reflexionsschicht aufzubringende Reaktionslackschicht aus einem kationisch härtenden Lack, insbesondere einem kationisch härtenden UV-Lack besteht.

31. Verfahren nach Anspruch 29, **dadurch gekennzeichnet, daß** das Papier und die Reflexionsschicht jeweils mit einer Komponente eines Mehrkomponentenlacks versehen werden, und daß der Mehrkomponentenlack während des Kontakts chemisch härtet.

32. Verfahren zur Herstellung eines Sicherheitspapiers, insbesondere für die Herstellung einer Banknote, Ausweiskarte oder dergleichen, mit einem mehrschichtigen Sicherheitselement, das zumindest zwei Kunststoffschichten aus Reaktionslacken aufweist, zwischen welchen Beugungsstrukturen in Form einer Reliefstruktur vorliegen, und die mit einer Reflexionsschicht kombiniert sind, wobei eine der Kunststoffschichten direkt an das Papier angrenzt, **dadurch gekennzeichnet, daß**
- ein Trägermaterial mit zumindest einer Kunststoffschicht aus Reaktionslack sowie einer Reflexionsschicht bereitgestellt wird, in welche die Beugungsstrukturen eingeprägt sind,
- das Sicherheitspapier und/oder die Reflexionsschicht zumindest in Teilbereichen mit einer weiteren Reaktionslackschicht versehen wird,
- das Sicherheitspapier und die Reflexionsschicht über die weitere Reaktionslackschicht in Kontakt gebracht werden, wobei der Reaktionslack ein blaulichthärtender Lack ist, der während des In-Kontakt-Bringens durch das Papier hindurch soweit gehärtet wird, daß ein untrennbarer Verbund entsteht,
- in den Fällen, in denen das Trägermaterial eine Transferfolie enthält, diese Transferfolie entfernt wird.

33. Verfahren nach Anspruch 32, **dadurch gekennzeichnet, daß** der blaulichthärtende Lack direkt auf das Papier aufgebracht wird.

34. Verfahren zur Herstellung eines Sicherheitsdokuments, wie einer Banknote, Ausweiskarte oder dergleichen, mit einem mehrschichtigen Sicherheitselement, das zumindest zwei Kunststoffschichten aus Reaktionslacken aufweist, zwischen welchen Beugungsstrukturen, insbesondere holografische Strukturen, in Form einer Reliefstruktur vorliegen, und die mit einer Reflexionsschicht kombiniert sind, wobei eine der Kunststoffschichten direkt an das Papier angrenzt, **dadurch gekennzeichnet, daß**
- eine Reaktionslackschicht zwischen ein Dokumentenmaterial und eine die Beugungsstruktur aufweisende Prägematrize eingebracht wird, wobei der Reaktionslack kurz vor oder während des In-Kontakt-Bringens aktiviert wird und während des Kontakts soweit härtet, daß die Reaktionslackschicht nach der Trennung von der Prägematrize die Beugungsstruktur aufweist, wobei während des Kontakts keine Strahlungseinwirkung erfolgt,
- die geprägte Reaktionslackschicht mit der Reflexionsschicht versehen wird, und
- auf die Reflexionsschicht eine weitere Reaktionslackschicht aufgebracht wird.

35. Verfahren zur Herstellung eines Sicherheitsdokuments, wie einer Banknote, Ausweiskarte oder dergleichen, mit einem mehrschichtigen Sicherheitselement, das zumindest zwei Kunststoffschichten aus Reaktionslacken aufweist, zwischen welchen Beugungsstrukturen, insbesondere holografische Strukturen, in Form einer Reliefstruktur vorliegen, und die mit einer Reflexionsschicht kombiniert sind, wobei eine der Kunststoffschichten direkt an das Papier angrenzt, **dadurch gekennzeichnet, daß**
- die Reaktionslackschicht zwischen das Dokumentenmaterial und eine die Beugungsstruktur aufweisende Prägematrize eingebracht wird, wobei der Reaktionslack ein blaulichthärtender Lack ist, der während des In-Kontakt-Bringens durch das Dokumentenmaterial hindurch soweit gehärtet wird, daß die Reaktionslackschicht nach der Trennung von der Prägematrize die Beugungsstrukturen aufweist,
- die geprägte Reaktionslackschicht mit der Reflexionsschicht versehen wird, und
- auf die Reflexionsschicht eine weitere Reaktionslackschicht aufgebracht wird.

36. Verfahren zur Herstellung eines Sicherheitsdokuments, wie einer Banknote, Ausweiskarte oder dergleichen, mit einem mehrschichtigen Sicherheitselement, das zumindest zwei Kunststoffschichten aus Reaktionslacken aufweist, zwischen welchen Beugungsstrukturen, insbesondere holografische Strukturen, in Form einer Reliefstruktur vorliegen, und die mit einer Reflexionsschicht kombiniert sind, wobei eine der Kunststoffschichten direkt an das Papier angrenzt, **dadurch gekennzeichnet, daß**
- ein Trägermaterial mit zumindest einer Kunststoffschicht aus Reaktionslack sowie einer Reflexionsschicht, in welche die Beugungsstrukturen eingeprägt sind, bereitgestellt wird,
- das Dokumentenmaterial und/oder die Reflexionsschicht zumindest in Teilbereichen mit einer weiteren Reaktionslackschicht versehen wird,
- das Dokumentenmaterial und die Reflexionsschicht über die weitere Reaktionslackschicht in Kontakt gebracht werden, wobei der Reaktionslack kurz vor oder während des In-Kontakts Bringens aktiviert wird und während des Kontakts soweit härtet, daß ein untrennbaer Verbund entsteht, wobei während des Kontakts keine Strahlungseinwirkung erfolgt,
- in den Fällen, in denen das Trägermaterial eine Transferfolie enthält, diese Transferfolie entfernt wird.

37. Verfahren zur Herstellung eines Sicherheitsdokuments, wie einer Banknote, Ausweiskarte oder dergleichen, mit einem mehrschichtigen Sicherheitselement, das zumindest zwei Kunststoffschichten aus Reaktionslacken aufweist, zwischen welchen Beugungsstrukturen in Form einer Reliefstruktur vorliegen, und die mit einer Reflexionsschicht kombiniert sind, wobei eine der Kunststoffschichten direkt an das Papier angrenzt, **dadurch gekennzeichnet, daß**
- ein Trägermaterial mit zumindest einer Kunststoffschicht aus Reaktionslack sowie einer Reflexionsschicht bereitgestellt wird, in welche die Beugungsstrukturen eingeprägt sind,
- das Dokumentenmaterial und/oder die Reflexionsschicht zumindest in Teilbereichen mit einer weiteren Reaktionslackschicht versehen wird,
- das Dokumentenmaterial und die Reflexionsschicht über die weitere Reaktionslackschicht in Kontakt gebracht werden, wobei der Reaktionslack ein blaulichthärtender Lack ist, der während des In-Kontakt-Bringens durch das Dokumentenmaterial hindurch soweit gehärtet wird, daß ein untrennbarer Verbund entsteht,
- in den Fällen, in denen das Trägermaterial eine Transferfolie enthält, diese Transferfolie entfernt wird.

## Claims

1. A security document such as bank note, identity card or the like with a multilayer security element (9) having at least two plastic layers (2, 4, 20, 21) consisting of reaction lacquers between which diffraction structures, in particular holographic structures, are present in the form of a relief structure and which are combined with a reflective layer (3), a first plastic layer (4, 20) bordering directly on the document on the one hand and directly on the reflective layer (3) on the other hand, **characterized in that** the first plastic layer (4, 20) is a layer of reaction lacquer from the group of cationically curing lacquers or blue light-curing lacquers.

2. The security document of claim 1, **characterized in that** the first plastic layer (4, 20) is formed as a cationically curing UV lacquer and the second plastic layer (2, 21) as a radically curing UV lacquer.

3. The security document of claim 1 or 2, **characterized in that** the reflective layer (3) contains openings.

4. A security document such as bank note, identity card or the like with a multilayer security element (9) having at least two plastic layers (2, 4, 20, 21) consisting of reaction lacquers between which diffraction structures, in particular holographic structures, are present in the form of a relief structure and which are combined with a reflective layer (3), a first plastic layer (4, 20) bordering directly on the document on the one hand and directly on the reflective layer (3) on the other hand, **characterized in that** the first plastic layer (4, 20) is a layer of reaction lacquer from the group of chemically curing multicomponent lacquer, and the reflective layer (3) contains openings.

5. The security document of claim 4, **characterized in that** both the first plastic layer (4, 20) and the second plastic layer (2, 21) are a chemically curing multicomponent lacquer.

6. The security document of at least one of claims 1 to 5, **characterized in that** the second plastic layer (2, 21) is likewise a reaction lacquer from the group of cationically curing lacquers, blue light-curing lacquers or chemically curing multicomponent lacquers.

7. The security document of at least one of claims 1 to 6, **characterized in that** the reflective layer (3) has a thickness smaller than 1 micron.

8. The security document of claim 7, **characterized in that** the thickness is in the range of 0.01 microns.

9. The security document of claim 3 or 4, **characterized in that** the openings are microcracks or micropores in the reflective layer (3).

10. The security document of claim 3 or 4, **characterized in that** the openings in the reflective layer (3) are present systematically in a predetermined pattern.

11. The security document of at least one of claims 1 to 10, **characterized in that** the reflective layer (3) is a metal layer.

12. An antifalsification paper for producing a bank note, identity card or the like with a multilayer security element (9) having at least two plastic layers (2, 4, 20, 21) consisting of reaction lacquers between which diffraction structures, in particular holographic structures, are present in the form of a relief structure which are combined with a reflective layer (3), a first plastic layer (4, 20) bordering directly on the antifalsification paper on the one hand and directly on the reflective layer (3) on the other hand, **characterized in that** the first plastic' layer (4, 20) is a layer of reaction lacquer from the group of cationically curing lacquers or blue light-curing lacquers.

13. An antifalsification paper for producing a bank note, identity card or the like with a multilayer security element (9) having at least two plastic layers (2, 4, 20, 21) consisting of reaction lacquers between which diffraction structures, in particular holographic structures, are present in the form of a relief structure which are combined with a reflective layer (3), a first plastic layer (4, 20) bordering directly on the antifalsification paper on the one hand and directly on the reflective layer (3) on the other hand, **characterized in that** the first plastic layer (4, 20) is a layer of reaction lacquer from the group of chemically curing multicomponent lacquers, and the reflective layer (3) contains openings.

14. The security document of claim 12 or 13, **characterized in that** the security element (9) is designed in the form of a thread or band.

15. A multilayer transfer foil consisting of a carrier layer and a plastic layer in which diffraction structures, for example holographic structures, are present in the form of a relief structure and which are combined with a reflective layer, **characterized in that** the plastic layer is a layer of reaction lacquer from the group of cationically curing lacquers or blue light-curing lacquers.

16. A multilayer transfer foil consisting of a carrier layer and a plastic layer in which diffraction structures, for example holographic structures, are present in the form of a relief structure and which is combined on the side facing away from the carrier layer with a reflective layer, **characterized in that** the plastic layer is a layer of reaction lacquer from the group of chemically curing multicomponent lacquers.

17. A multilayer transfer foil consisting of a carrier layer and a plastic layer in which diffraction structures, for example holographic structures, are present in the form of a relief structure and which are combined with a reflective layer, **characterized in that** the plastic layer is a layer of reaction lacquer from the group of chemically curing multicomponent lacquers, and the reflective layer contains openings.

18. A method for producing an antifalsification paper, in particular for producing a bank note, identity card or the like, with a multilayer security element having at least two plastic layers consisting of reaction lacquers between which diffraction structures, in particular holographic structures, are present in the form of a relief structure and which are combined with a reflective layer, one of the plastic layers bordering directly on the paper, **characterized by** the steps of
- providing a layer of reaction lacquer between an antifalsification paper and a matrix having the diffraction structure, the reaction lacquer being activated shortly before or during contacting, and curing during contact to an extent such that the layer of reaction lacquer has the diffraction structure after separation from the matrix, no action of radiation occurring during contact,
- providing the embossed layer of reaction lacquer with the reflective layer, and
- applying a further layer of reaction lacquer to the reflective layer.

19. The method of claim 18, **characterized in that** the layer of reaction lacquer to be embossed consists of a cationically curing lacquer, in particular a cationically curing UV lacquer.

20. The method of claim 18, **characterized in that** the lacquer to be embossed consists of a chemically curing multicomponent lacquer.

21. A method for producing an antifalsification paper, in particular for producing a bank note, identity card or the like, with a multilayer security element having at least two plastic layers consisting of reaction lacquers between which diffraction structures, in particular holographic structures, are present in the form of a relief structure and which are combined with a reflective layer, one of the plastic layers bordering directly on the paper, **characterized by** the steps of
- providing a layer of reaction lacquer between an antifalsification paper and a matrix having the diffraction structure, the reaction lacquer being a blue light-curing lacquer which is cured through the paper during contacting to an extent such that the layer of reaction lacquer has the diffraction structures after separation from the matrix,
- providing the embossed layer of reaction lacquer with the reflective layer, and
- applying a further layer of reaction lacquer to the reflective layer.

22. The method of claim 21, **characterized in that** the blue light-curing lacquer is applied directly to the paper, provided with the embossing there and irradiated with blue light through the paper during the embossing process and thereby cured.

23. The method of at least one of claims 18 to 22, **characterized in that** the layer of reaction lacquer to be embossed is applied to the paper at least in some areas.

24. The method of at least one of claims 18 to 23, **characterized in that** the layer of reaction lacquer to be embossed is applied to the matrix at least in some areas and transferred directly to the paper with the embossing.

25. The method of at least one of claims 18 to 24, **characterized in that** the security element is applied to the antifalsification paper in the form of a thread or band.

26. The method of at least one of claims 18 to 25, **characterized in that** the embossed layer of reaction lacquer is provided only partly with the reflective layer so that the embossed layer and the second layer of reaction lacquer are in direct contact with each other in the areas free from reflective layer.

27. The method of at least one of claims 18 to 26, **characterized in that** a metal layer is applied as the reflective layer by the vacuum metalizing technique or by the photolytic metalizing technique.

28. The method of at least one of claims 18 to 27, **characterized in that** the matrix is first provided with a metalized layer and the layer of reaction lacquer to be embossed is only then applied to this metalized layer.

29. A method for producing an antifalsification paper, in particular for producing a bank note, identity card or the like, with a multilayer security element having at least two plastic layers consisting of reaction lacquers between which diffraction structures, in particular holographic structures, are present in the form of a relief structure and which are combined with a reflective layer, one of the plastic layers bordering directly on the paper, **characterized by** the steps of
- providing a carrier material with at least one plastic layer consisting of reaction lacquer and a reflective layer in which the diffraction structures are embossed,
- providing the antifalsification paper and/or the reflective layer with a further layer of reaction lacquer at least in some areas,
- contacting the antifalsification paper and the reflective layer via the further layer of reaction lacquer, the reaction lacquer being activated shortly before or during contacting, and curing during contact to an extent such that an inseparable compound arises, no action of radiation occurring during contact,
- removing the transfer foil in cases where the carrier material contains a transfer foil.

30. The method of claim 29, **characterized in that** the layer of reaction lacquer to be applied to the paper or reflective layer consists of a cationically curing lacquer, in particular a cationically curing UV lacquer.

31. The method of claim 29, **characterized in that** the paper and the reflective layer are each provided with a component of a multicomponent lacquer, and the multicomponent lacquer cures chemically during contact.

32. A method for producing an antifalsification paper, in particular for producing a bank note, identity card or the like, with a multilayer security element having at least two plastic layers consisting of reaction lacquers between which diffraction structures are present in the form of a relief structure and which are combined with a reflective layer, one of the plastic layers bordering directly on the paper, **characterized by** the steps of
- providing a carrier material with at least one plastic layer consisting of reaction lacquer and a reflective layer in which the diffraction structures are embossed,
- providing the antifalsification paper and/or the reflective layer with a further layer of reaction lacquer at least in some areas,
- contacting the antifalsification paper and the reflective layer via the further layer of reaction lacquer, the reaction lacquer being a blue light-curing lacquer which is cured through the paper during contacting to an extent such that an inseparable compound arises,
- removing the transfer foil in cases where the carrier material contains a transfer foil.

33. The method of claim 32, **characterized in that** the blue light-curing lacquer is applied directly to the paper.

34. A method for producing a security document such as bank note, identity card or the like with a multilayer security element having at least two plastic layers consisting of reaction lacquers between which diffraction structures, in particular holographic structures, are present in the form of a relief structure and which are combined with a reflective layer, one of the plastic layers bordering directly on the paper, **characterized by** the steps of
- providing a layer of reaction lacquer between a document material and a matrix having the diffraction structure, the reaction lacquer being activated shortly before or during contacting, and curing during contact to an extent such that the layer of reaction lacquer has the diffraction structure after separation from the matrix, no action of radiation occurring during contact,
- providing the embossed layer of reaction lacquer with the reflective layer, and
- applying a further layer of reaction lacquer to the reflective layer.

35. A method for producing a security document such as bank note, identity card or the like with a multilayer security element having at least two plastic layers consisting of reaction lacquers between which diffraction structures, in particular holographic structures, are present in the form of a relief structure and which are combined with a reflective layer, one of the plastic layers bordering directly on the paper, **characterized by** the steps of
- providing the layer of reaction lacquer between the document material and a matrix having the diffraction structure, the reaction lacquer being a blue light-curing lacquer which is cured through the document material during contacting to an extent such that the layer of reaction lacquer has the diffraction structures after separation from the matrix,
- providing the embossed layer of reaction lacquer with the reflective layer, and
- applying a further layer of reaction lacquer to the reflective layer.

36. A method for producing a security document such as bank note, identity card or the like with a multilayer security element having at least two plastic layers consisting of reaction lacquers between which diffraction structures, in particular holographic structures, are present in the form of a relief structure and which are combined with a reflective layer, one of the plastic layers bordering directly on the paper, **characterized by** the steps of
- providing a carrier material with at least one plastic layer consisting of reaction lacquer and a reflective layer in which the diffraction structures are embossed,
- providing the document material and/or the reflective layer with a further layer of reaction lacquer at least in some areas,
- contacting the document material and the reflective layer via the further layer of reaction lacquer, the reaction lacquer being activated shortly before or during contacting, and curing during contact to an extent such that an inseparable compound arises, no action of radiation occurring during contact,
- removing the transfer foil in cases where the carrier material contains a transfer foil.

37. A method for producing a security document such as bank note, identity card or the like with a multilayer security element having at least two plastic layers consisting of reaction lacquers between which diffraction structures, in particular holographic structures, are present in the form of a relief structure and which are combined with a reflective layer, one of the plastic layers bordering directly on the paper, **characterized by** the steps of
- providing a carrier material with at least one plastic layer consisting of reaction lacquer and a reflective layer in which the diffraction structures are embossed,
- providing the document material and/or the reflective layer with a further layer of reaction lacquer at least in some areas,
- contacting the document material and the reflective layer via the further layer of reaction lacquer, the reaction lacquer being a blue light-curing lacquer which is cured through the document material during contacting to an extent such that an inseparable compound arises,
- removing the transfer foil in cases where the carrier material contains a transfer foil.

## Revendications

1. Document de sécurité tel qu'un billet de banque, une carte d'identité ou analogue, comportant un élément de sécurité multicouche (9), ayant au moins deux couches en matière plastique (2, 4, 20, 21) constituées de vernis réactifs, entre lesquelles des structures de diffraction, en particulier des structures holographiques, sont présentes sous la forme d'une structure en relief et qui sont combinées avec une couche réfléchissante (3), une première couche en matière plastique (4, 20) bordant directement le document d'une part, et directement la couche réfléchissante (3), d'autre part, **caractérisé en ce que** la première couche en matière plastique (4, 20) est une couche de vernis réactif du groupe des vernis à durcissement cationique, ou des vernis à durcissement à la lumière bleue.

2. Document de sécurité selon la revendication 1, **caractérisé en ce que** la première couche en matière plastique (4, 20) est formée d'un vernis à durcissement cationique par ultraviolets et la deuxième couche en matière plastique est constituée d'un vernis à durcissement radicalaire aux ultraviolets.

3. Document de sécurité selon la revendications 1 ou 2, **caractérisé en ce que** la couche réfléchissante (3) contient des ouvertures.

4. Document de sécurité tel qu'un billet de banque, une carte d'identité ou analogue, comportant un élément de sécurité multicouche (9), ayant au moins deux couches en matière plastique (2, 4, 20, 21) constituées de vernis réactifs, entre lesquelles des structures de diffraction, en particulier des structures holographiques, sont présentes sous la forme d'une structure en relief et qui sont combinées avec une couche réfléchissante (3), une première couche en matière plastique (4, 20) bordant directement le document d'une part, et directement la couche réfléchissante (3), d'autre part, **caractérisé en ce que** la première couche en matière plastique (4, 20) est une couche de vernis réactif du groupe des vernis et **en ce que** la couche réfléchissante (3) contient des ouvertures.

5. Document de sécurité selon la revendication 4, **caractérisé en ce qu'**aussi bien la première couche en matière plastique (4, 20) que la deuxième couche en matière plastique (2, 21) sont constituées d'un vernis multicomposant à durcissement chimique.

6. Document de sécurité selon au moins l'une des revendications 1 à 5, **caractérisé en ce que** la deuxième couche en matière plastique (2, 21) est de même un vernis réactif issu du groupe comprenant les vernis à durcissement cationique, les vernis à durcissement à la lumière bleue, ou les vernis multicomposants à durcissement chimique.

7. Document de sécurité selon au moins l'une des revendications 1 à 4, **caractérisé en ce que** la couche réfléchissante (3) présente une épaisseur inférieure à 1 micronmicromètre.

8. Document de sécurité selon la revendication 7, **caractérisé en ce que** l'épaisseur est de l'ordre de 0,01 micron.

9. Document de sécurité selon la revendication 3 ou 4, **caractérisé en ce que** les ouvertures sont des microfissures ou des micropores situés dans la couche réfléchissante (3).

10. Document de sécurité selon la revendication 3 ou 4, **caractérisé en ce que** les ouvertures situées dans la couche réfléchissante (3) sont présentes systématiquement selon un modèle prédéterminé.

11. Document de sécurité selon au moins l'une des revendications 1 à 10, **caractérisé en ce que** la couche réfléchissante (3) est une couche métallique.

12. Papier de sécurité pour fabriquer un billet de banque, une carte d'identité ou analogue, comportant un élément de sécurité multicouche (9), ayant au moins deux couches en matière plastique (2, 4, 20, 21) constituées de vernis réactifs, entre lesquelles des structures de diffraction, en particulier des structures holographiques, sont disposées sous la forme d'une structure en relief, et qui sont combinées avec une couche réfléchissante (3), une première couche en matière plastique (4, 20), bordant directement le papier de sécurité d'une part, et directement la couche réfléchissante (3) d'autre part, **caractérisé en ce que** la première couche en matière plastique (4, 20) est une couche de vernis réactif issu du groupe comprenant des vernis à durcissement cationique ou des vernis à durcissement à la lumière bleue.

13. Papier de sécurité pour fabriquer un billet de banque, une carte d'identité ou analogue, comportant un élément de sécurité multicouche (9), ayant au moins deux couches en matière plastique (2, 4, 20, 21) constituées de vernis réactifs, entre lesquelles des structures de diffraction, en particulier des structures holographiques, sont disposées sous la forme d'une structure en relief, et sont combinées avec une couche réfléchissante (3), une première couche en matière plastique (4, 20), bordant directement le papier de sécurité d'une part, et directement la couche réfléchissante (3) d'autre part, **caractérisé en ce que** la première couche en matière plastique (4, 20), est une couche de vernis réactif issu du groupe comprenant les vernis multicomposants à durcissement chimique, et **en ce que** la couche réfléchissante (3) contient des ouvertures.

14. Document de sécurité selon la revendication 12 ou 13, **caractérisé en ce que** l'élément de sécurité (9) est conçu sous la forme d'un fil ou d'un ruban.

15. Une feuille de transfert multicouche constituée d'une couche support et d'une couche en matière plastique, dans laquelle des structures de diffraction, par exemple des structures holographiques, sont présentes sous la forme d'une structure en relief et qui sont combinées avec une couche réfléchissante, **caractérisée en ce que** la couche en matière plastique est une couche de vernis réactif issu du groupe comprenant les vernis à durcissement cationique, les vernis à durcissement à la lumière bleue, ou les vernis multicomposants à durcissement chimique.

16. Feuille de transfert multicouche, constituée d'une couche support et d'une couche en matière plastique, dans laquelle des structures de diffraction, par exemple des structures holographiques, sont présentes sous la forme d'une structure en relief et sur la face opposée à la couche support, sont combinées avec une couche réfléchissante, **caractérisée en ce que** la couche en matière plastique est une couche de vernis réactif du groupe des vernis multicomposants à durcissement chimique.

17. Feuille de transfert multicouche, constituée d'une couche support et d'une couche en matière plastique, dans laquelle des structures de diffraction, par exemple des structures holographiques, sont présentes sous la forme d'une structure en relief et sur la face opposée à la couche support, sont combinées avec une couche réfléchissante, **caractérisée en ce que** la couche en matière plastique est une couche de vernis réactif du groupe des vernis multicomposants à durcissement chimique et **en ce que** la couche réfléchissante contient des ouvertures.

18. Procédé de fabrication d'un papier de sécurité, en particulier pour fabriquer un billet de banque, une carte d'identité ou analogue, comportant un élément de sécurité multicouche ayant au moins deux couches en matière plastique constituées de vernis réactifs, entre lesquelles des structures de diffraction, en particulier des structures holographiques, sont présentes sous la forme d'une structure en relief et qui sont combinées avec une couche réfléchissante, l'une des couches en matière plastique bordant directement le papier, **caractérisé par** les étapes consistant :
- à placer une couche de vernis réactif entre un papier de sécurité et une matrice de gaufrage présentant la structure de diffraction, à activer le vernis réactif peu de temps avant ou pendant la mise en contact, et pendant le contact à faire durcir jusqu'à un degré tel que la couche de vernis réactif présente la structure de diffraction après la séparation de la matrice de gaufrage, aucun effet de rayonnement ne se produisant pendant le contact,
- à munir la couche gaufrée de vernis réactif de la couche réfléchissante, et à appliquer une autre couche de vernis réactif sur la couche réfléchissante.

19. Procédé selon la revendication 18, **caractérisé en ce que** la couche de vernis réactif à gaufres est constituée d'un vernis à durcissement cationaique, en particulier un vernis à durcissement cationique aux rayonnements ultra-violets.

20. Procédé selon la revendication 18, **caractérisé en ce que** le vernis à gaufrer est constitué d'un vernis multicomposant à durcissement chimique.

21. Procédé de fabrication d'un papier de sécurité, en particulier pour fabriquer un billet de banque, une carte d'identité ou analogue, comportant un élément de sécurité multicouche ayant au moins deux couches en matière plastique constituées de vernis réactifs, entre lesquelles des structures de diffraction, en particulier des structures holographiques, sont présentes sous la forme d'une structure en relief et qui sont combinées avec une couche réfléchissante, l'une des couches en matière plastique bordant directement le papier, **caractérisé par** les étapes consistant :
- à placer une couche de vernis réactif entre un papier de sécurité et une matrice de gaufrage présentant la structure de diffraction, le vernis réactif étant un vernis durcissant à la lumière bleue qui est durci à travers le papier, pendant la mise en contact, jusqu'à un degré tel que la couche de vernis réactif présente les structures de diffraction après la séparation de la matrice,
- à munir la couche gaufrée de vernis réactif avec la couche réfléchissante, et
- à appliquer une autre couche de vernis réactif sur la couche réfléchissante.

22. Procédé selon la revendication 21, **caractérisé en ce que** le vernis à durcissement à la lumière bleue est appliqué directement sur le papier, y est muni du gaufrage, et est irradié avec de la lumière bleue à travers le papier pendant le processus de gaufrage et est ainsi durci.

23. Procédé selon l'une des revendications 14 à 18, **caractérisé en ce que** la couche de vernis réactif gaufrée est appliquée sur le papier, au moins dans des zones partielles.

24. Procédé selon au moins l'une des revendications 18 à 23, **caractérisé en ce que** la couche de vernis réactif gaufrée est appliquée à la matrice de gaufrage, au moins dans des zones partielles, et est transférée directement sur le papier avec le gaufrage.

25. Procédé selon au moins l'une des revendications 18 à 24, **caractérisé en ce que** l'élément de sécurité est appliqué au papier de sécurité sous la forme d'un fil ou d'un ruban.

26. Procédé selon au moins l'une des revendications 18 à 25, **caractérisé en ce que** la couche de vernis réactif gaufrée est pourvue seulement partiellement de la couche réfléchissante, de sorte que la couche gaufrée et la deuxième couche de vernis réactif sont en contact direct l'une avec l'autre dans les zones exemptes de couche réfléchissante.

27. Procédé selon au moins l'une des revendications 18 à 26, **caractérisé en ce qu'**une couche métallique est appliquée, à titre de couche réfléchissante, par la technique de métallisation sous vide ou par la technique de métallisation photolytique.

28. Procédé selon au moins l'une des revendications 18 à 27, **caractérisé en ce que** la matrice de gaufrage est d'abord dotée d'une métallisation et ensuite la couche de vernis de réaction gaufrée est appliquée sur cette couche métallisée.

29. Procédé de fabrication d'un papier de sécurité, en particulier pour fabriquer un billet de banque, une carte d'identité ou analogue, comportant un élément de sécurité multicouche ayant au moins deux couches en matière plastique constituées de vernis réactifs, entre lesquelles des structures de diffraction, en particulier des structures holographiques, sont présentes sous la forme d'une structure en relief et qui sont combinées avec une couche réfléchissante, l'une des couches en matière plastique bordant directement le papier, **caractérisé par** les étapes consistant :
- à préparer un matériau de support comportant au moins une couche en matière plastique constituée d'un vernis réactif et d'une couche réfléchissante, dans laquelle sont gaufrées les structures à diffraction,
- à munir le papier de sécurité et/ou la couche réfléchissante d'une autre couche de vernis réactif, au moins dans zones partielles,
- à mettre en contact le papier de sécurité et la couche réfléchissante via l'autre couche de vernis réactif, à activer le vernis réactif peu avant ou pendant la mise en contact, et pendant le contact à faire durcir jusqu'à un degré tel qu'il se forme un composite inséparable, aucun effet de rayonnement ne se produisant pendant le contact,
- à enlever cette feuille de transfert dans les cas dans lesquels le matériau support contient une feuille de transfert.

30. Procédé selon la revendication 29, **caractérisé en ce que** la couche de vernis réactif à appliquer sur le papier ou sur la couche réfléchissante est constituée d'une couche de vernis réactif en un vernis à durcissement cationique, en particulier un vernis à durcissement cationique par le rayonnement ultraviolet.

31. Procédé selon la revendication 29, **caractérisé en ce que** le papier et la couche réfléchissante sont chacun pourvus d'un composant du vernis multicomposant, et **en ce que** le vernis multicomposant durcit chimiquement pendant le contact.

32. Procédé de fabrication d'un papier de sécurité, en particulier pour fabriquer un billet de banque, une carte d'identité ou analogue, comportant un élément de sécurité multicouche ayant au moins deux couches en matière plastique constituées de vernis réactifs, entre lesquelles des structures de diffraction sont présentes sous la forme d'une structure en relief et qui sont combinées avec une couche réfléchissante, l'une des couches en matière plastique bordant directement le papier, **caractérisé par** les étapes consistant à :
- à préparer un matériau de support comportant au moins une couche en matière plastique constituée d'un vernis réactif et d'une couche réfléchissante, dans laquelle les structures à diffraction sont gaufrées,
- à doter le papier de sécurité et/ou la couche réfléchissante d'une autre couche de vernis réactif, au moins dans des zones partielles,
- à mettre en contact le papier de sécurité et la couche réfléchissante via l'autre couche de vernis réactif, le vernis réactif étant un vernis durcissant à la lumière bleue qui est durci à travers le papier, pendant la mise en contact, jusqu'à un degré tel qu'il se forme un composite inséparable,
- à enlever cette feuille de transfert dans les cas dans lesquels le matériau support contient une feuille de transfert.

33. Procédé selon la revendication 32, **caractérisé en ce que** le vernis durcissant à la lumière bleue est appliquée directement sur le papier.

34. Procédé de fabrication d'un document de sécurité, tel qu'un billet de banque, une carte d'identité ou analogue, comportant un élément de sécurité multicouche ayant au moins deux couches en matière plastique constituées de vernis réactifs, entre lesquelles des structures de diffraction, en particulier des structures holographiques, sont présentes sous la forme d'une structure en relief et qui sont combinées avec une couche réfléchissante, l'une des couches en matière plastique bordant directement le papier, **caractérisé par** les étapes consistant :
- à disposer une couche de vernis réactif entre un matériau de document et une matrice de gaufrage ayant la structure de diffraction, à activer le vernis réactif peu de temps avant ou pendant la mise en contact, et pendant le contact à le faire durcir jusqu'à un degré tel que la couche de vernis réactif présente la structure de diffraction après la séparation de la matrice, aucun effet de rayonnement ne se produisant pendant le contact,
- à munir la couche gaufrée en vernis réactif de la couche réfléchissante, et
- à appliquer une autre couche de vernis réactif sur la couche réfléchissante.

35. Procédé de fabrication d'un document de sécurité, tel qu'un billet de banque, une carte d'identité ou analogue, comportant un élément de sécurité multicouche ayant au moins deux couches en matière plastique constituées de vernis réactifs, entre lesquelles des structures de diffraction, en particulier des structures holographiques, sont présentes sous la forme d'une structure en relief et qui sont combinées avec une couche réfléchissante, l'une des couches en matière plastique bordant directement le papier, **caractérisé par** les étapes consistant :
- à disposer une couche de vernis réactif entre le matériau de document et une matrice de gaufrage ayant la structure de diffraction, le vernis réactif étant un vernis durcissant à la lumière bleue qui est durci à travers le papier, pendant la mise en contact, jusqu'à un degré tel que la couche de vernis réactif présente les structures de diffraction après la séparation de la matrice de gaufrage,
- à munir la couche gaufrée en vernis réactif de la couche réfléchissante, et
- à appliquer une autre couche de vernis réactif sur la couche réfléchissante.

36. Un procédé de fabrication d'un document de sécurité, tel qu'un billet de banque, une carte d'identité ou analogue, comportant un élément de sécurité multicouche ayant au moins deux couches en matière plastique constituées de vernis réactifs, entre lesquelles des structures de diffraction en particulier des structures holographiques, sont présentes sous la forme d'une structure en relief et qui sont combinées avec une couche réfléchissante, l'une des couches en matière plastique bordant directement le papier, **caractérisé par** les étapes consistant :
- à préparer un matériau de support comportant au moins une couche en matière plastique constituée d'un vernis réactif et d'une couche réfléchissante, dans laquelle les structures de diffraction sont gaufrées,
- à munir le matériau du document et/ou la couche réfléchissante d'une autre couche de vernis réactif, au moins dans des zones partielles,
- à mettre en contact le matériau des documents et la couche réfléchissante via l'autre couche de vernis réactif, à activer le vernis réactif peu de temps avant ou pendant la mise en contact, et pendant le contact à le faire durcir jusqu'à un degré tel qu'il se forme un composite inséparable, aucun effet de rayonnement ne se produisant pendant le contact,
- à enlever cette feuille de transfert dans les cas dans lesquels le matériau support contient une feuille de transfert.

37. Procédé de fabrication d'un document de sécurité, tel qu'un billet de banque, une carte d'identité ou analogue, comportant un élément de sécurité multicouche ayant au moins deux couches en matière plastique constituées de vernis réactifs, entre lesquelles des structures de diffraction sont présentes sous la forme d'une structure en relief, et qui sont combinées avec une couche réfléchissante, l'une des couches en matière plastique bordant directement le papier, **caractérisé par** les étapes consistant :
- à préparer un matériau de support avec au moins une couche en matière plastique constituée d'un vernis réactif et d'une couche réfléchissante, dans laquelle les structures à diffraction sont gaufrées,
- à doter le matériau des documents et/ou la couche réfléchissante d'une autre couche de vernis réactif, au moins dans des zones partielles,
- à mettre en contact le matériau des documents et la couche réfléchissante via l'autre couche de vernis réactif, le vernis réactif étant un vernis durcissant à la lumière bleue qui est durci à travers le matériau des documents, pendant la mise en contact, jusqu'à un degré tel qu'il se forme un composite inséparable,
- enlever cette feuille de transfert dans les cas dans lesquels le matériau support contient une feuille de transfert.
